# EUROPEAN PATENT APPLICATION

(11) **EP 1 128 312 A2**
(43) Date of publication of application: **29.08.2001**
(21) Application number: 01301664.7
(22) Date of filing: 23.02.2001
(51) Int. Cl.: G06F 19/00, A63F 13/12

(54) **Network game system and game distribution device and method**

(30) Priority: 25.02.2000 JP 2000050066
(71) Applicant: Konami Corporation, Minato-ku, Tokyo (JP); KCE Tokyo Inc., Tokyo (JP)
(72) Inventor: Orui, Hiroyasu, Tokyo (JP); Mori, Shoji, Tokyo (JP)
(74) Representative: Pluckrose, Anthony William

(57) **Abstract**

A network game system (10) preventing unfair operation and providing players with thrill and excitement is disclosed. In a link tag for hypertext, a back prevention counter value for identifying the hypertext is included. The counter value is also stored in a database. When a player presses a link button to send a URL, i.e. a game command, (S210), the counter value for the player is read out from the database (S212). The back prevention counter value included in the received URL is compared with the readout back prevention counter value. When the two values do not match, the player is informed that unfair operation is prohibited (S214). The link tag may also include time information, so that a deadline for transmission of a game command using the link tag is set by employing the time information.

## Description

The present invention relates to network game systems, and devices andmethods for distributing games. The present invention more particularly relates to a technique for preventing unfair actions in network game systems.

Network game systems for providing games using HTTP (hypertext transfer protocol) are becoming widespread. In such a system, a player activates a Web browser with a personal computer, a variety of portable data terminals, or the like, to receive hypertexts for presenting a game screen from a game server. Such a game screen includes linkbuttons corresponding to game commands. When a player pushes any of these link buttons with a mouse or the like, a URL associated with that link button is sent to the game server as a game command. The game server receives this game command, and generates and sends hypertext corresponding to the command as game data back to the personal computer or the like of the player.

Web browsers typically have a "back" function, i.e. a function for re-invoking the previously received hypertext (game screen). Web browsers are designed to sequentially store the received hypertexts in a RAM, a hard disk drive, or the like, and this "back" function is used for retrieving and presenting the stored hypertext on the display.

Providing hypertexts, i.e. game data, to Web browsers having such a "back" function gives rise to the following problem. That is, when a player pushes one of a plurality of link buttons presented on a game screen, receives a responsive hypertext, and finds that it is not the way they desired for the game to proceed, the player can re-invoke a previous game screen by using the "back" function and reselect another link button. In other words, the player can try all the game commands by utilizing the "back" function.

Suppose a quiz game giving three possible answers for each question is provided using HTTP from a game server to a personal computer or the like . When a player selects any of the three options presented on the screen and the answer is proved to be wrong, they can return to the previous game screen using the "back" function and try another option. For another example, when a mystery adventure game is supplied using HTTP from a game server to a personal computer or the like and a player encounters an undesirable result, such as "game over", after trying a certain option provided on the game screen, the player can recall the previous game screen using the "back" function and try another option. If such an unfair action remains unprohibited, players lose excitement and the inherent attractions of the game may be diminished.

The present invention provides, in a first aspect, a network game system comprising a game terminal, and a game distribution device for providing the game terminal with game data through a communication network, wherein:
said game distribution device comprises
   game data generation means for generating game data including game command information and game data identifying information,
   game data identifying information storage means for storing the game data identifying information included in the generated game data, and
   game data transmission means for transmitting the generated game data to said game terminal; and
said game terminal comprises
   game data reception means for receiving the game data from said game distribution device,
   game command generation means for generating a game command including the game data identifying information included in the received game data based on the game command information included in the received game data, and
   game command transmission means for transmitting the generated game command to said game distribution device; and
said game distribution device further comprises
   game command reception means for receiving the game command from said game terminal, and
   game process limitation means for performing a game process based on the received game command when a match is observed between the game data identifying information included in the received game command and the game data identifying information stored in said game data identifying information storage means, and limiting the game process when no match is observed.

In a second aspect, the present invention provides a game distribution device for providing a game terminal with game data through a communication network, comprising:
game data generation means for generating game data including game command information and game data identifying information;
game data identifying information storage means for storing the game data identifying information included in the generated game data;
game data transmission means for transmitting the generated game data to said game terminal;
game command reception means for receiving a game command including the game data identifying information from said game terminal; and
game process limitation means for performing a game process based on the received game command when a match is observed between the game data identifying information included in the received game command and the game data identifying information stored in said game data identifying information storage means, and limiting the game process when no match is observed.

In a third aspect, the present invention provides a game distribution method for providing a game terminal with game data through a communication network, the method comprising:
generating game data including game command information and game data identifying information;
storing the game data identifying information included in the generated game data;
transmitting the generated game data to said game terminal;
receiving a game command including the game data identifying information from said game terminal; and
performing a game process based on the received game command when a match is observed between the game data identifying information included in the received game command and the stored game data identifying information, and limiting the game process when no match is observed.

In a fourth aspect, the present invention provides a network game system comprising a game terminal, and a game distribution device for providing the game terminal with game data through a communication network, wherein:
said game distribution device includes
   timing means for generating time information,
   game data generation means for generating game data including time information generated by the timing means and game command information, and
   game data transmission means for transmitting the generated game data to said game terminal; and
said game terminal includes
   game data reception means for receiving the game data from said game distribution device,
   game command generation means for generating a game command including the time information included in the received game data based on the game command information
included in the received game data, and
   game command transmission means for transmitting the generated game command to said game distribution device; and
said game distribution device further includes
   game command reception means for receiving the game command from said game terminal, and
   game process limitation means for comparing the time information included in the received game command and current time information generated by said timing means, performing a game process based on the received game command when a predetermined time period has not yet elapsed, and limiting the game process when the predetermined time period has elapsed.

In a fifth aspect, the present invention provides a game distribution device for providing a game terminal with game data through a communication network, comprising:
timing means for generating time information;
game data generationmeans for generating game data including the time information generated by the timing means and game command information;
game data transmission means for transmitting the generated game data to said game terminal;
game command reception means for receiving a game command including the time information from said game terminal, and
game process limitation means for comparing the time information included in the received game command and current time information generated by said timing means, performing a game process based on the received game command when a predetermined time period has not yet elapsed, and limiting the game process when the predetermined time period has elapsed.

In a sixth aspect, the present invention provides a game distribution method for providing a game terminal with game data through a communication network, the method comprising:
generating time information;
generating game data including the generated time information and game command information;
transmitting the generated game data to said game terminal;
receiving a game command including the time information from said game terminal; and
comparing the time information included in the received game command and current time information, performing a game process based on the received game command when a predetermined time period has not yet elapsed, and limiting the game process when the predetermined time period has elapsed.

The present invention has been conceived in view of the above-described problems, and an object thereof is to provide a network game system, and game distribution device and method capable of preventing unfair actions and offering thrill and excitement to players.

In order to solve the above-described problems, a network game system according to one aspect of the present invention includes a game terminal and a game distribution device for providing the game terminal with game data through a communication network. The game distribution device includes game data generation means for generating game data including game command information and game data identifying information, game data identifying information storage means for storing the game data identifying information included in the generated game data, and game data transmission means for transmitting the generated game data to the game terminal. The game terminal includes game data reception means for receiving the game data from the game distribution device, game command generation means for generating a game command including the game data identifying information included in the received game data based on the game command information included in the received game data, and game command transmission means for transmitting the generated game command to the game distribution device. The game distribution device further includes game command reception means for receiving the game command from the game terminal, and game process limitation means for performing a game process based on the received game command when a match is observed between the game data identifying information included in the received game command and the game data identifying information stored in the game data identifying information storage means, and limiting the game process when no match is observed.

A game distribution device for providing a game terminal with game data through a communication network according to the present invention includes: game data generation means for generating game data including game command information and game data identifying information; game data identifying information storage means for storing the game data identifying information included in the generated game data; game data transmission means for transmitting the generated game data to the game terminal; game command reception means for receiving a game command including the game data identifying information from the game terminal; and game process limitation means for performing a game process based on the received game command when a match is observed between the game data identifying information included in the received game command and the game data identifying information stored in the game data identifying information storage means, and limits the game process when no match is observed.

Further, a game distribution method for providing a game terminal with game data through a communication network according to the present invention includes: a game data generation step for generating game data including game command information and game data identifying information; a game data identifying information storage step for storing the game data identifying information included in the generated game data; a game data transmission step for transmitting the generated game data to the game terminal; a game command reception step for receiving a game command including the game data identifying information from the game terminal; and a game process limitation step for performing a game process based on the received game command when a match is observed between the game data identifying information included in the received game command and the game data identifying information stored in the game data identifying information storage means, and limits the game process when no match is observed.

According to the present invention, the game data includes the game command information and the game data identifying information. The game data identifying information is stored in preparation for receiving a game command. The generated game data is transmitted to the game terminal from the game distribution device. The game terminal generates a game command based on the game command information and transmits it to the game distribution device, and the game command here includes the game data identifying information. Upon receiving the game command, the game distribution device compares the game data identifying information contained there in and the game data identifying information already stored. When there is a match between the two, a game process is performed based on the game command. When there is no match, the game process is limited. Thus, when the game data identifying information contained in the game data received in the past is included in the game command and transmitted to the game distribution device from the game terminal, the game distribution device can limit a usual game process, thereby preventing unfair actions and offering thrill and excitement to players.

According to one embodiment of the present invention, the game data generation means included in the game distribution device includes game data identifying information generation means for generating the game data identifying information when the game data is generated, and the game data identifying information generated by the game data identifying information generation means is included in the game data. The game data identifying information is, for example, a counter value, a random number, or the like. This eliminates the need for setting the game data identifying information in advance for all the game data that may be transmitted.

According to another embodiment of the present invention, the game process limitation means returns the game data based on the received game command to the game terminal as the game process when the match is observed, and limits the game process and returns game data different from the above-mentioned game data to the game terminal when the match is not observed. A game screen based on different game data is then generated at the game terminal, informing the player that, for example, unfair actions are prohibited.

According to still another embodiment of the present invention, the game data generation means generates the game data in which the game data identifying information is embedded in the game command information, so that the game data identifying information can be concealed in the game command information, and can also be processed when the game command information is processed. As a result, the game data identifying information can be easily transmitted to the game distribution device as part of the game command.

According to another aspect of the present invention, a network game system comprises a game terminal, and a game distribution device for providing the game terminal with game data through a communication network. The game distribution device includes timing means for generating time information, game data generation means for generating game data including time information generated by the timing means and game command information, and game data transmission means for transmitting the generated game data to the game terminal. The game terminal includes game data reception means for receiving the game data from the game distribution device, game command generation means for generating a game command including the time information included in the received game data based on the game command information included in the received game data, and game command transmission means for transmitting the generated game command to the game distribution device. The game distribution device further includes game command reception means for receiving the game command from the game terminal, and game process limitation means for comparing the time information included in the received game command and current time information generated by the timing means, performing a game process based on the received game command when a predetermined time period has not yet elapsed, and limiting the game process when the predetermined time period has elapsed.

A game distribution device for providing a game terminal with game data through a communication network according to the present invention comprises: timing means for generating time information; game data generation means for generating game data including the time information generated by the timing means and game command information; game data transmission means for transmitting the generated game data to the game terminal; game command reception means for receiving the game command including the time information from the game terminal; and game process limitation means for comparing the time information included in the received game command and current time information generated by the timing means, performing a game process based on the received game command when a predetermined time period has not yet elapsed, and limiting the game process when the predetermined time period has elapsed.

Further, a game distribution method for providing a game terminal with game data through a communication network according to the present invention comprises: a timing step for generating time information; a game data generation step for generating game data including the generated time information and game command information; a game data transmission step for transmitting the generated game data to the game terminal; a game command reception step for receiving a game command including the time information from the game terminal; and a game process limitation step for comparing the time information included in the received game command and current time information, performing a game process based on the received game command when a predetermined time period has not yet elapsed, and limiting the game process when the predetermined time period has elapsed.

According to the present invention, time information is generated and included in game data. At the game terminal, the time information included in the game data is included in the game command. The game distribution device receiving this game command compares the time information contained therein and current time information, and checks whether or not a predetermined time period has elapsed. When the predetermined time period has not yet elapsed, a game process is performed based on the game command. On the other hand, when the predetermined time period has elapsed, the game process is limited. As a result, when a game command is transmitted based on the game data after a predetermined time period has elapsed from the time of reception, the game distribution device can limit a usual game process . Further, when the time information included in the game data received in the past is contained in the game command and transmitted to the game distribution device from the game terminal, it is possible for the game distribution device to limit a usual game process, thereby preventing unfair actions and offering thrill and excitement to players.

According to an embodiment of the present invention, the game process limitation means returns the game data based on the received game command to the game terminal as the game process when the predetermined time has not yet elapsed, and limits the game process and returns game data different from the above-mentioned game data to the game terminal when the predetermined time period has elapsed. Thus, a game screen based on different game data can be generated at the game terminal, informing the player that, for example, unfair actions are prohibited.

According to another embodiment of the present invention, the game data generation means generates the game data by embedding the time information in the game command information. Thus, the time information can be concealed in the game command information, and processed when the game command information is processed, so that the time information can be easily transmitted to the game distribution device as part of the game command.

The present invention will now be described by way of example only with reference to the accompanying drawings in which:
Fig. 1 illustrates an overall configuration of a network game system according to a first embodiment of the present invention.
Fig. 2 illustrates the concept of a pirate game implemented by the network game system according to the first embodiment of the present invention.
Figs. 3-7 are flow charts for describing a game process in a network game distribution device according to the first embodiment of the present invention.
Fig. 8 illustrates a configuration of a record in a main DB provided in a game DB.
Fig. 9 illustrates a configuration of ranking data for each sea area stored in the game DB.
Fig. 10 illustrates an example of a game screen presented at the start of a voyage.
Fig. 11 illustrates a link tag for displaying a link button.
Fig. 12 illustrates an argument provided to a CGI program executed in a game server.
Fig. 13A and 13B illustrate an examples of a game screen related to an ordinary event.
Fig. 14 illustrates an example of a game screen related to an island information event.
Fig. 15 illustrates an example of a game screen related to a treasure island information event.
Fig. 16 illustrates an example of a game screen related to a treasure island arrival event.
Fig. 17 illustrates an example of a game screen related to a return route discovery event.
Figs. 18 and 19 are flow charts for describing an unfair action prevention technique employed in the network game distribution device according to the first embodiment of the present invention.
Fig. 20 is a flow chart for describing a game process in a network game distribution device according to a second embodiment of the present invention.
Fig. 21 illustrates an example of a game screen presented for setting a quiz.
Fig. 22 illustrates a link tag for displaying a link button.
Fig. 23 illustrates an example of a game screen presented when the answer is correct.
Fig. 24 illustrates an example of a game screen presented when the answer is incorrect.
Fig. 25 illustrates an example of a game screen presented in the case of time over.

The entire disclosure of the corresponding Japanese application 2000-50066 filed on February 25, 2000, including specification, claims, drawings and summary, are incorporated herein by reference.

Preferred embodiments of the present invention will now be described with reference to the drawings.

### [First Embodiment]

A first embodiment of the invention relates to an example where the present invention is applied to a pirate game. The pirate game is implemented by using a communication network and a mobile phone. In the game space, a player plays a role of a captain of a pirate ship and takes a voyage. The person who discovers the most treasure and brings at back to the port will be the winner. In the game space, a player can return to the mother port when the player discovers a return route and chooses to return.

In the game space, seven sea areas are arranged interspersed with islands with a variety of characteristic features, and a player continues the voyage from one is land to another. During the voyage, the player encounters various game events, such as emergence of monsters, barricade by enemy pirates, and discovery of islands where sailors and food can be supplied. The ship can be navigated simply by the player's selection of one of the three directions.

The important point lies in "determining the balance between sailors and food supply" and "selecting the timing of the return". The game is over when either sailors or food supply run out during the voyage. Because the loading capacity of the pirate ship is limited and the food supply decreases as the voyage is continued, the player may wish to load the ship with plenty of food before starting the voyage. However, it means that the player cannot have many sailors aboard, and they lose the sailors in encountering the game events, tending to result in the game soon being over. Thus, the balance between the sailors and the food supply to be put aboard is an important factor for "game clear", i.e. for beating the game.

Although the chances of losing the sailors are increased as the voyage is continued, the chances of discovering more treasures are also increased. Therefore, when the player finds a return route after discovering a fair amount of treasure, they have to decide whether to choose to safely return with all the treasures they gained, or to take a risk of losing sailors by risky game events and ending the game and continuing the voyage for more treasures. In other words, players can enjoy casino-like gamesmanship in this pirate game.

Further, in this pirate game, when the players safely return to the port, they are ranked according to the treasures they have gained for each sea area. The names of the top 20 captains for each sea area appear in the pirate game others are playing, sometimes as friendly pirates and other times as enemy pirates. The name of the captain is set by each player. Accordingly, players repeatedly play the game, trying to be ranked high on the list and make their captains appear in the other players' games. The players also take an interest in unique and characteristic names that other players named the enemy pirates . Thus, while basically providing an individual game (game space) for each of a plurality of players, these individual games are related to the extent that the names of the captains of the high-scored players appear in the game of other players. As a result, the players can enjoy the game individually and simultaneously get the feeling that they are participating in a network game to some extent.

There is also a network game of the type enjoyed by a plurality of players in the same game space. In the network game of this type, not only the name of the player him/herself but also the names of other players appear on the game screen. The players, therefore, enjoy the feeling that they are participating in a network game and also get the joy of self-assertion. In the network game of this type, however, the name of a player does not appear on the other players' game screen once that player goes off-line. In this pirate game, on the other hand, the top 20 captains for each sea area appear in the pirate games that other players are playing not only when that player is on-line but also when they go off-line. As a result, the players' desire for self-assertion can be satisfied to a greater extent.

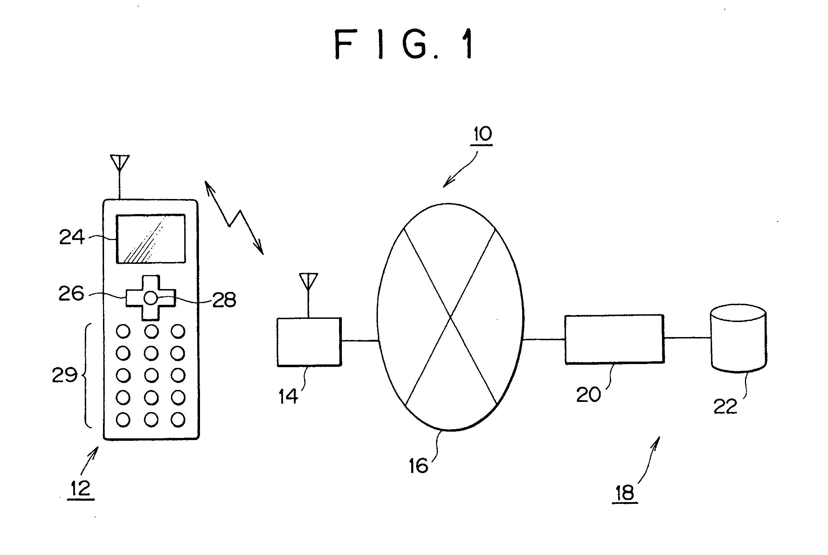

Fig. 1 shows an overall configuration of a network game system 10 according to an embodiment of the present invention. The illustrated network game system 10 includes a mobile phone 12 (a game terminal), a mobile phone base station 14, a communication network 16, and a network game distribution device 18. The network game distribution device 18 includes a game server 20 and a game database (DB) 22.

The mobile phone 12 includes a display 24 formed by an LCD or the like, a direction button 26, a function button 28, and a group of circular buttons 29. The mobile phone 12 is of a conventionally well-known type. The group of circular buttons 29 allows for dialing numbers, and a telephone book and various set menus are shown on the display 24. The various menus are set by using the direction button 26 and the function button 28.

The mobile phone 12 is especially provided with a function of connecting to the communication network 16, such as the Internet, through the mobile phone base station 14. This network connecting function of the mobile phone 12 is utilized in the present embodiment. More specifically, a user of the mobile phone 12 transmits a URL (uniform resource locator) to the communication network 16 using the direction button 26, the function button 28, and the group of circular buttons 29, and obtains a hypertext corresponding to the URL from the game server 20. In the game server 20, the URL transmitted from the mobile phone 12 is recognized as a game command, and hypertext (game data) corresponding to the game command is generated and sent back to the mobile phone 12 through the communication network 16 and the mobile phone base station 14. Upon receiving the hypertext, the mobile phone 12 presents the game screen on the display 24 based on the received hypertext. The above-described transmission of URLs and reception and display of hypertexts are achieved by performing Web browser functions with the mobile phone 12.

In relaying the URL transmitted in a wireless manner from the mobile phone 12 to the communication network 16, the mobile phone base station 14 adds a customer identification number assigned to the mobile phone 12 to the URL, so that the sender of the URL, i.e. the game command, can be identified in the game server 20.

The game server 20 is a server computer which is connected to the communication network 16, and to which the game DB 22 is connected. The game server 20 refers to the content stored in the game DB 22 when it generates the hypertext, i.e. game data, based on the URL, i.e. game command. The game process of the present invention, which is one of the characteristic features thereof, is implemented based on the program recorded in a storage device (information storage medium) , such as a hard disk device, provided in the game server 20. The program is stored in the storage device through a CD-ROM, a DVD, or the like, having the program recorded therein, or through the communication network 16.

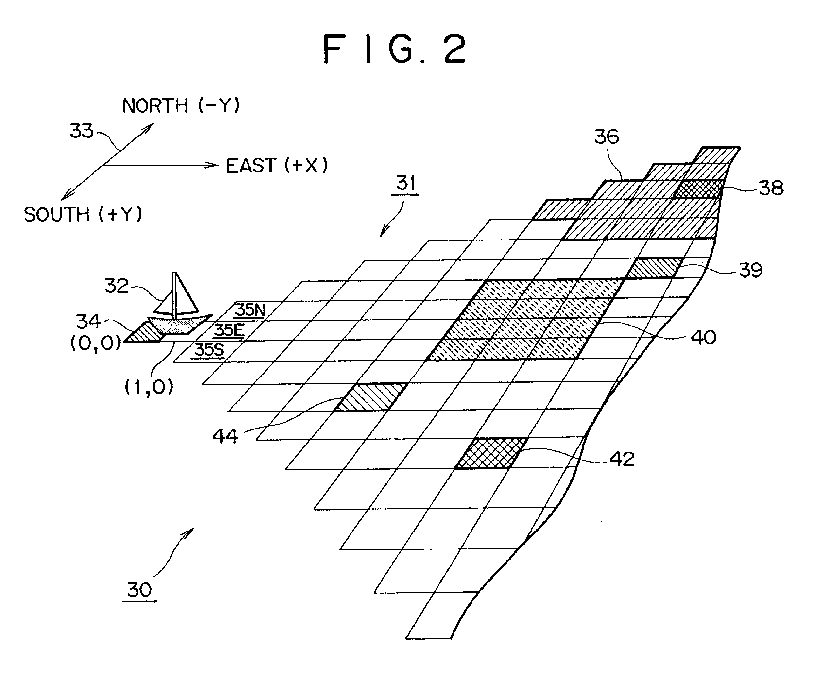

Fig. 2 illustrates the concept of the pirate game implemented by the network game system 10 of the present embodiment. In this pirate game, a sea area 31, which is the stage where the game is played, is provided in a game space 30. The game space 30 is ideated by each player. The sea area 31 has an isosceles right-angled triangular shape, and a port 34 is provided adjacent to the right angle. The port 34 is set as the origin (0,0) in the game space 30. The game space 30 is surveyed with coordinates 33. It is defined herein that the direction from the port 34 to the sea area 31 halving the right angle is east, and that the directions perpendicular thereto are north and south. After a ship 32 of the player leaves the port 34, it travels in the sea area 31 in accordance with the game commands.

As described hereinafter, the game commands mainly include "take a northern route", "take an eastern route", and "take a southern route". When the game command "take a northern route" is selected, the player's ship 32 advances by one unit in the northeast direction in the game space 30. When the game command "take an eastern route" is selected, the player' s ship 32 advances eastward by one unit. With the game command "take a southern route", the player's ship 32 advances in the southeast direction by one unit. When, for example, the player's ship 32 is located at the port 34 as shown in Fig. 2, the ship 32 moves to a block 35N, a block 35E, or a block 35S by selecting the game command "take a northern route", "take an eastern route", or "take a southern route", respectively. Thus, the player's ship 32 travels in the sea area 31 in accordance with the game command (URL) transmitted from the mobile phone 12.

The sea area 31 includes a dangerous area 36, a calm area 40, and the like. These areas are registered beforehand in the game DB 22. When the player's ship 32 enters the dangerous area 36, dangerous game events, such as a monster event and a pirate event, are more likely to occur than in other areas. When the ship 32 enters the calm area 40, a calm event, which allows a safe voyage, is more likely to occur. The player is allowed to load the ship 32 with sailors and food supply before starting the voyage, and such sailors and food supply increase or decrease by the game event encountered in the sea area 31. For example, when the ship 32 encounters a huge shark, which is one of the characters appearing in the game, during the voyage, the player loses sailors. When the ship arrives at a random island 44, sailors and food are supplied. The enemy characters, such as a huge shark, and the random island 44 emerge based on random numbers as the player's ship 32 travels in the sea area 31.

The ship 32 continues traveling, overcoming various game events and aiming to reach the treasure island 38. When the player's ship 32 reaches the treasure island 38, the player can acquire a bar of gold and other treasures. The treasure island 38 emerges at a predetermined probability during the voyage. When the ship 32 reaches a return island 39 thereafter, the player is urged to choose either to return to the port 34 or to continue the voyage. If the player chooses to continue the voyage to search for other treasure islands 38, they can acquire more bars of gold and treasures although the player must take a risk. On the other hand, if the player chooses to return to the port 34, they can safely bring back the bars of gold and other treasures that have been acquired.

There is also an island emergence event in the sea area 31. When the player's ship 32 encounters the island emergence event, the player is notified of information relating to the location of an island, such as "there is an island at X," and a definite island 42 emerges in the game space 30 constructed in the game DB 22 in accordance with the information. As a result, the player can navigate the ship 32 based on the acquired information, and head for the definite island 42, where sailors and food can be supplied.

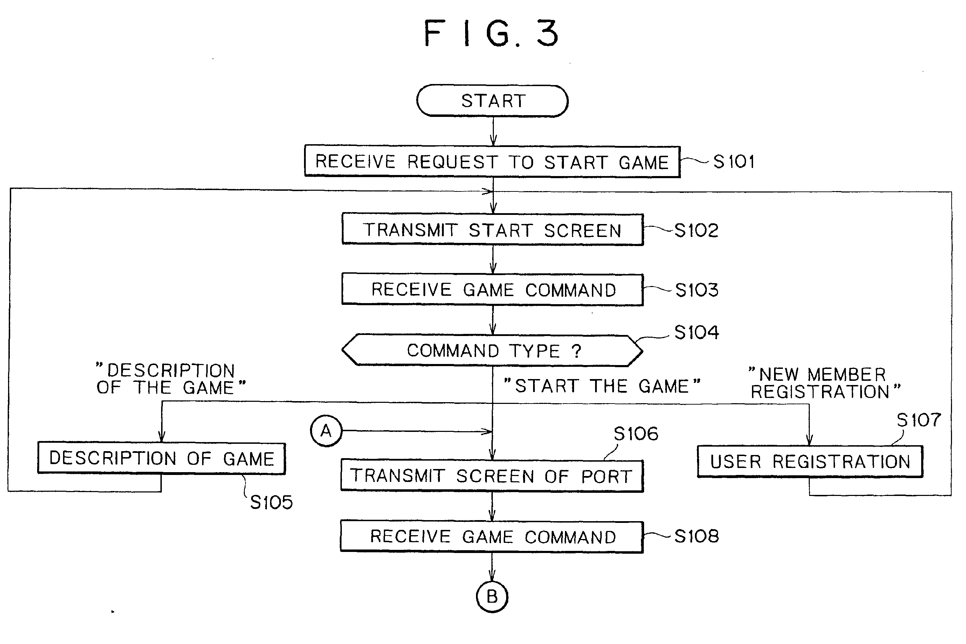

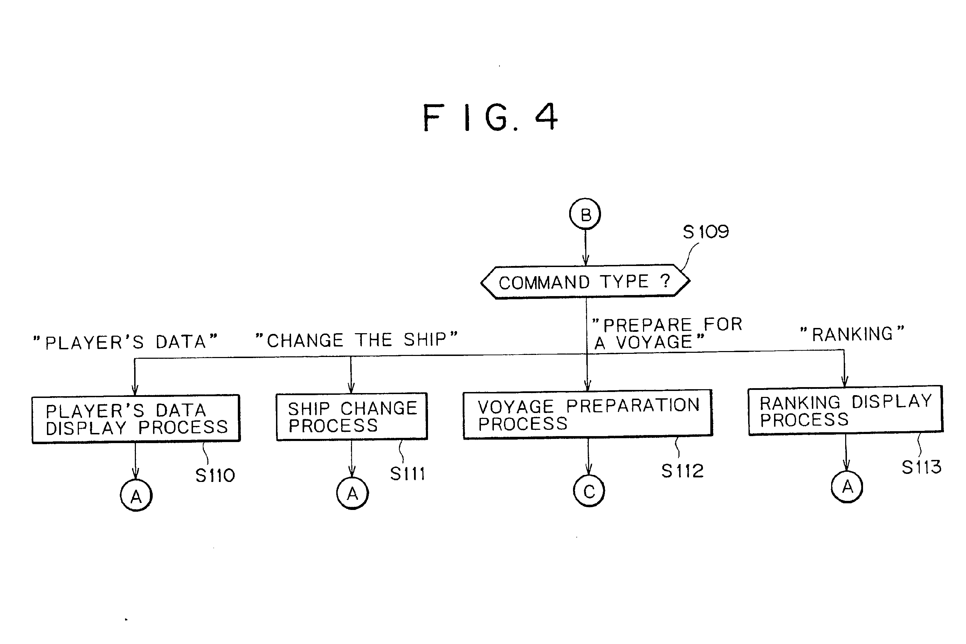

The process performed by the game server 20 to implement the above-described pirate game will be described in detail with reference to the flow charts in Fig. 3 to Fig. 7. When the game server 20 receives a URL requesting to start a game from the mobile phone 12 through the communication network 16 (S101), the hypertext for presenting a start screen is returned to the mobile phone 12 (S102). On the start screen, link buttons for "description of the game", "start the game", and "new member registration" are shown. Looking at the start screen, the player selects one of the link buttons using the direction button 26, the function button 28, and/or the group of buttons 29, and sends the URL, i.e. the game command, to the game server 20. The game server 20 receives the URL (S103), and determines the type of the game command (S104).

If the game command is the command to ask for "description of the game", the hypertext including the description of the game is returned to the mobile phone 12 (S105). Next, in response to the game command transmitted from the mobile phone 12, the hypertext for presenting the start screen is retransmitted to the mobile phone 12 (S102). If the game command received from the mobile phone 12 at S104 is the command to request "newmember registration", a user registration process is performed (S107). That is, the network game distribution device 18 provides users of the mobile phone 12 with the game on a fee-charging basis, and therefore the users of the mobile phone 12 must register at the mobile phone base station 14 to show their intention to pay for the game before they start. When the game server 20 receives the game command asking for a new member registration at S103, it makes a query to the mobile phone base station 14 as to whether or not the customer is willing to pay for the game distribution using customer identifying information contained in the game command as a search key. This query is made through the communication network 16. If the user has registered using the mobile phone 12 to show that they are willing to pay for the game distribution, the game server 20 generates a record for that customer in a main DB provided in the game DB 22.

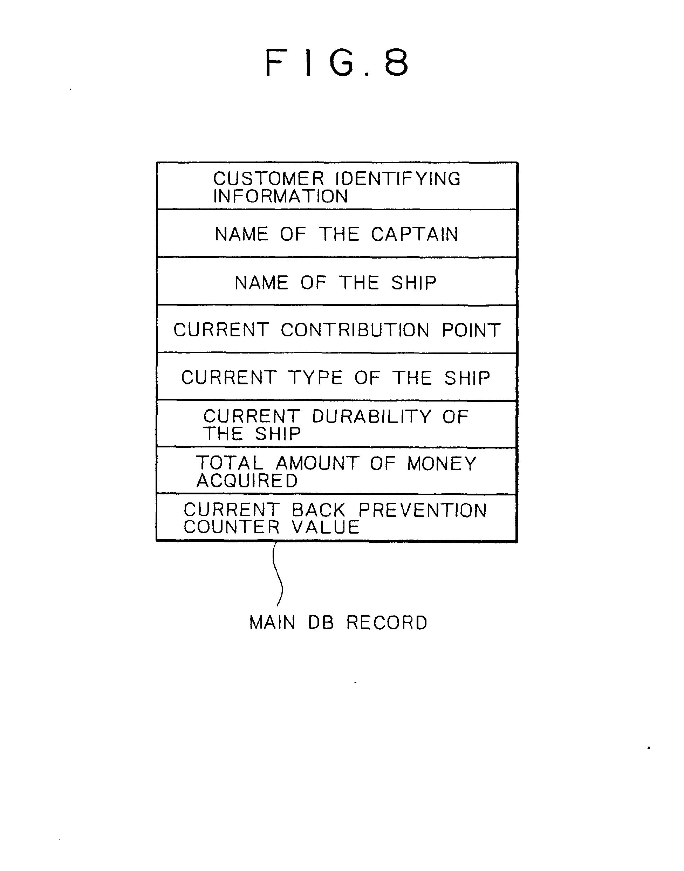

Fig. 8 shows the content of the record. As shown in Fig. 8, the main DB includes such information as "customer identifying information", "name of the captain", "name of ship", "current contribution point", "current type of ship", "current durability of ship", "total amount of money acquired", and "current back prevention counter value (game data identifying information) " for each customer. The "customer identifying information" is contained in the game command (URL) transmitted from the mobile phone 12 as described above. When the user of the mobile phone 12 has registered at the mobile phone base station 14 to receive paid game distribution service, the game server 20 generates the above-described record to be stored in the main DB, and transmits the hypertexts for registering "name of the captain" and "name of the ship" to the mobile phone 12. When the player responsively inputs the names of the captain and the ship using the group of buttons 29 and the like and sends them back to the game server 20 as game commands, the "name of the captain" and the "name of the ship" are registered in the record for that customer. Default values are set for "current contribution point", "current type of the ship", "durability of the current ship", "total amount of money acquired", and "current back prevention counter value". The "current contribution point" shows the current amount of money the player owns. The "type of current ship" shows the type of pirate ship currently selected by the player. The "current durability of the ship" corresponds to the degree of deterioration of the ship. In this game, the ship deteriorates each time the player takes a voyage, and the player is urged to change the pirate ship. The "total amount of money acquired" shows the total amount of money the player has acquired so far by playing the game. The "back prevention counter value" is designed to prevent unfair plays, which will be described hereinafter. The process returns to the step S102 after the above-described setting, and the hypertext for presenting the start screen is transmitted to the mobile phone 12.

If the game command received from the mobile phone 12 at the step S104 is the command requesting to "start the game", the hypertext for displaying the port 34 is returned to the mobile phone 12 (S106). On the game screen displaying the port 34, the user can select to "refer to player's data", "change the ship", "prepare for a voyage", or "refer to ranking data". When the user of the mobile phone 12 selects one of the commands with the direction button 26 and the function button 28, the selected game command is transmitted to the game server 20. After the game server 20 receives the game command (S108), it determines the type of the command (S109).

When the game command is the command requesting to "refer to player's data", the main DB record for that customer is read out from the game DB 22, and the hypertext representing that content (see Fig. 8) is transmitted to the mobile phone 12, whereby data, such as the names of the ship and captain, of the user of the mobile phone 12 is presented on the display 24 of the mobile phone 12. When a command requesting for a return is transmitted to the game server 20 from the mobile phone 12, the process returns to the step S102, and the hypertext representing the start screen is transmitted to the mobile phone 12.

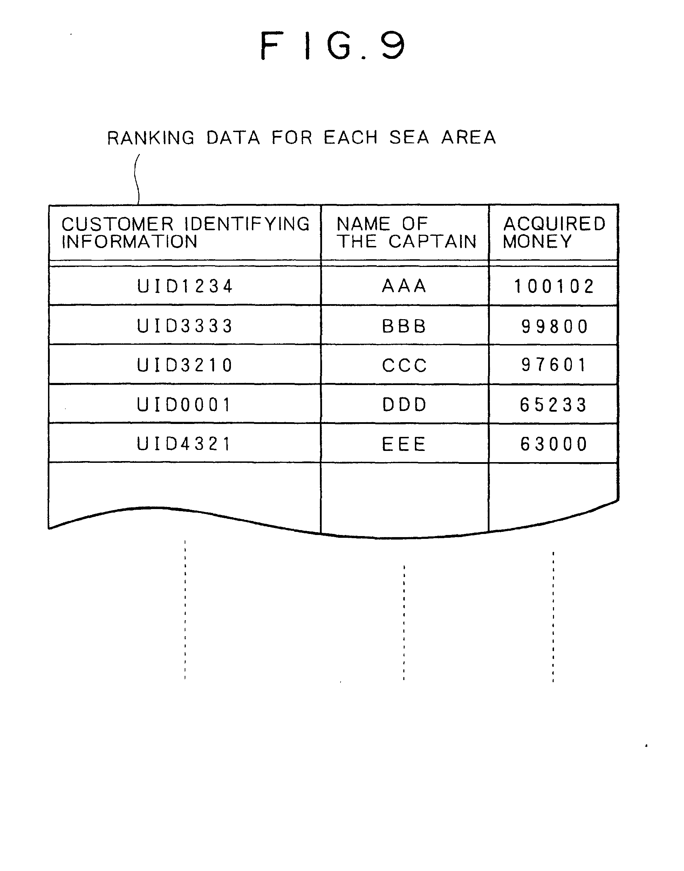

When the game command is the one requesting to "display ranking", the game server 20 performs a ranking display process (S113). The ranking data for each sea area illustrated in Fig. 9 is recorded in the game DB 22, and in the process performed at the step S113 the hypertext representing such ranking data is transmitted to the mobile phone 12. This pirate game offers the sea areas 31 of a plurality of types, with a variety of characteristics suited for a wide range of players from beginners to the advanced. Players are allowed to choose any of the sea areas 31 before playing a game, and those who safely return to the port 34 with plenty of acquired bars of gold and treasure are registered in the ranking data for each sea area 31. As illustrated in Fig. 9, in the ranking data for each sea area, items of "customer identifying information", "name of captain", and "acquired money" of the players in the corresponding sea area 31 are recorded in an associated manner. In the illustrated example, the top 20 players are registered for each of the sea areas 31. After the player refers to the ranking data, the hypertext representing the start screen is retransmitted to the mobile phone 12 in response to the game command requesting a return (S102).

Further, if the game command requests to "prepare for a voyage", the game server performs a voyage preparation process (S112). In this voyage preparation process, the player can determine how many sailors and how much food is to be loaded into the pirate ship currently selected by the player. That is, the maximum loading capacity is predetermined for each of the pirate ships selected by users as described above, and a player can set the values for the number of sailors and the amount of food so that the sum of these values is equal to or less than the predetermined maximum loading capacity. For example, although a player can enjoy a longer voyage by selecting a greater amount of food and fewer sailors, the likelihood that the player loses all the sailors through encounters with enemy characters and cannot return to the port 34 becomes higher. On the other hand, if the player chooses to load more sailors and less food, the player will not be badly affected by losing sailors through encounters with enemy characters. However, because the food supply runs out in a short time, the player cannot safely return to the port 34. Therefore, the player must choose a very good and delicate balance between the number of sailors and the amount of food. The game thus allows players to enjoy maneuvering settings during preparation for the voyage. In the voyage preparation process at the step S112, the player is allowed a choice of the sea area 31 to play using the direction button 26 and the function button 28.

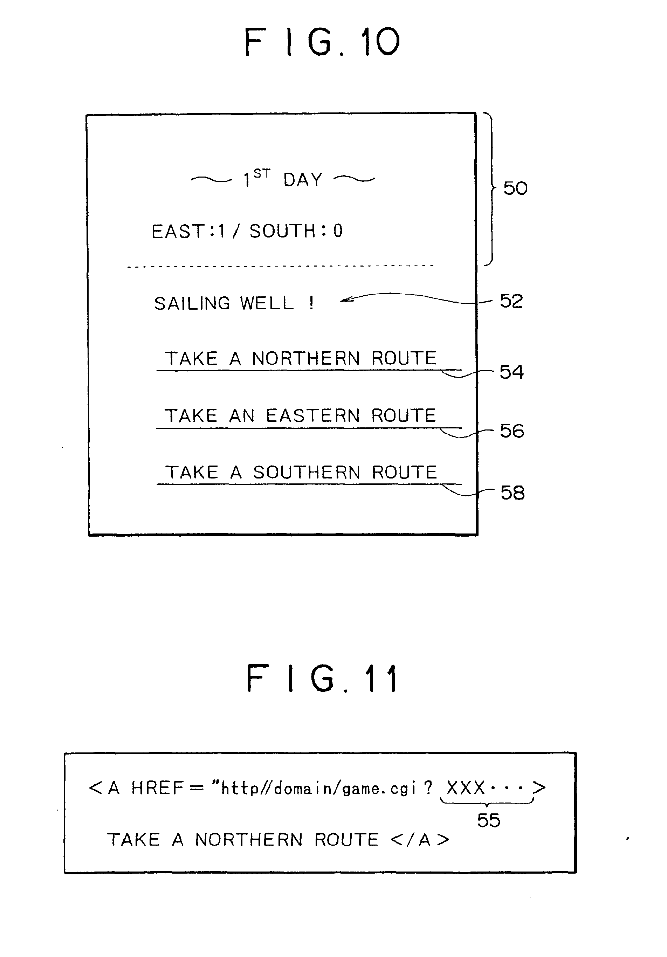

After selecting the game command for setting out on the voyage using the mobile phone 12 in the voyage preparation process, the player's ship 32 is launched into the sea area 31. At this time the game server 20 sets the position of the player's ship as the coordinate (1,0), and generates the hypertext representing this situation to be transmitted to the mobile phone 12. Fig. 10 shows the game screen presented on the display 24 of the mobile phone 12 at this moment. The game screen includes a situation display 50 at an upper part thereof, indicating that it is currently "the X^{th} day" counting from the start of the voyage, and the coordinate of the ship in the sea area 31 (coordinate in the sea area) thereunder. Under the display 50, a message 52 expressing the situation of the voyage, such as the text "Sailing well!", is displayed. In the bottommost portion, link buttons 54, 56, and 58 are displayed. At the link button 54, the text "take a northern route" is displayed. By selecting this link button 54, the player can navigate the ship 32 in the northeast direction in the game space 30. Similarly, when the player selects the link button 56 where the text "take an eastern route" is displayed, the ship 32 can travel toward the east. When the player selects the link button 58 where the text "take a southern route" is displayed, the ship 32 can advance in the southeastern direction.

The game screen shown in Fig. 10 is generated based on the hypertext transmitted from the game server 20. Specifically the link button 54 is displayed based on a link tag shown in Fig. 11 contained in the transmitted hypertext. The link button 54 is designed to be linked to "domain/game.cgi", which is a CGI (common gateway interface) program for implementing this pirate game, and is run on the game server 20. The portion following "?" is an argument 55. The argument 55 includes the game command for taking a northern route and the current situation of the player. More specifically, in this game server 20, the hypertext to be transmitted to the mobile phone 12 is designed to include the current situation of the player in the argument 55 of the linked CGI program to avoid successive recording of each player's current situation in the game DB 22. The CGI program (domain/game.cgi) performs the game process as designated by the argument 55. When the hypertext representing the game screen is transmitted to the mobile phone 12, the same CGI program (domain/game.cgi) is designated as a link in the link tag and the latest situation of the player is added as the argument 55. This allows the CGI program to know the current situation of the player from the argument 55 and perform the game process based thereon.

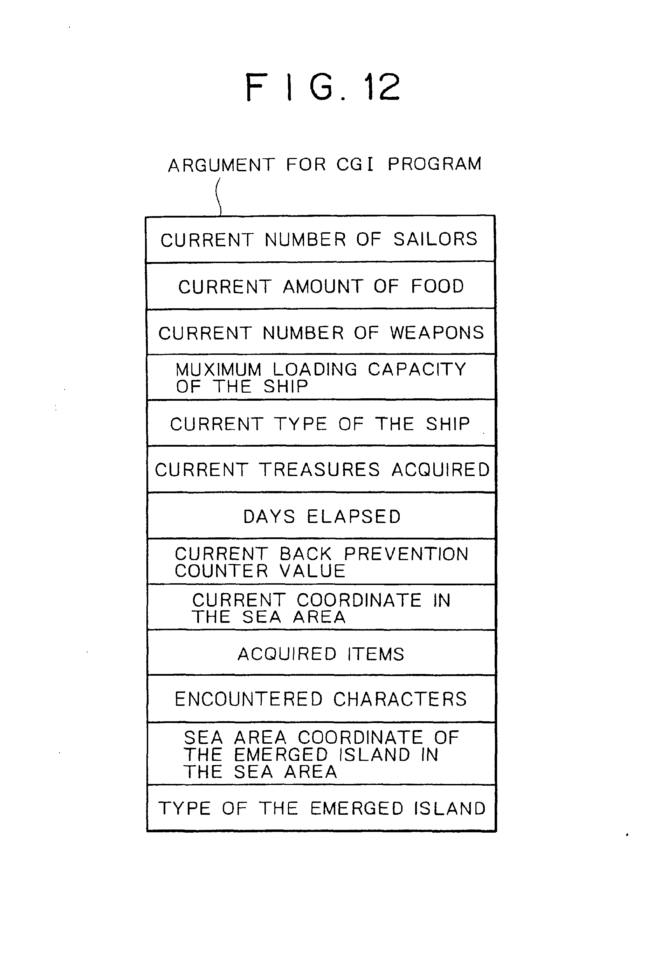

Fig. 12 shows the content of the argument 55 provided to the CGI program. As shown, the argument 55 includes "current number of sailors", "current amount of food", "current number of weapons", "maximum loading capacity of the ship", "current type of the ship", "current treasures acquired", "days elapsed", "current back prevention counter value", "current coordinate in the sea area", "acquired items", "encountered characters", "coordinate of the emerged island in the sea area", and "type of the emerged island". The items "current number of sailors", "current amount of food", and "current number of weapons" indicate the latest number or amount of sailors, food, and weapons as a result of increase or decrease due to game events. The item "maximum loading capacity of the ship" indicates the maximum loading capacity of the ship currently selected by the player. The item "current type of the ship" indicates the type of ship currently selected by the player. The item "current treasures acquired" indicates the total amount of treasures the player has acquired. The item "days elapsed" indicates for how many days the player has been traveling. The item "current back prevention counter value" indicates the current value of the counter for preventing unfair operation by the player. This corresponds to the current back prevention counter value stored in the record of the main DB, which will be described in detail hereinafter. The item "current coordinate in the sea area" indicates where the player's ship 32 is currently located in the game space 30. The item "acquired items" indicates the type of the game items (treasures and the like) the player's ship 32 has acquired in the sea area 31. This information is used to avoid repeatedly giving the same game item to the player. The item "encountered characters" indicates the types of the main game characters the player has encountered, and this information is used to prevent the player from repeatedly encountering the same game character. The item "coordinate of the emerged island in the sea area" indicates the coordinate of the definite island 42. Finally, the item "type of emerged island" indicates the type of definite island 42. The definite island 42 may be an ordinary island or a treasure island, and the type thereof is stored in this column.

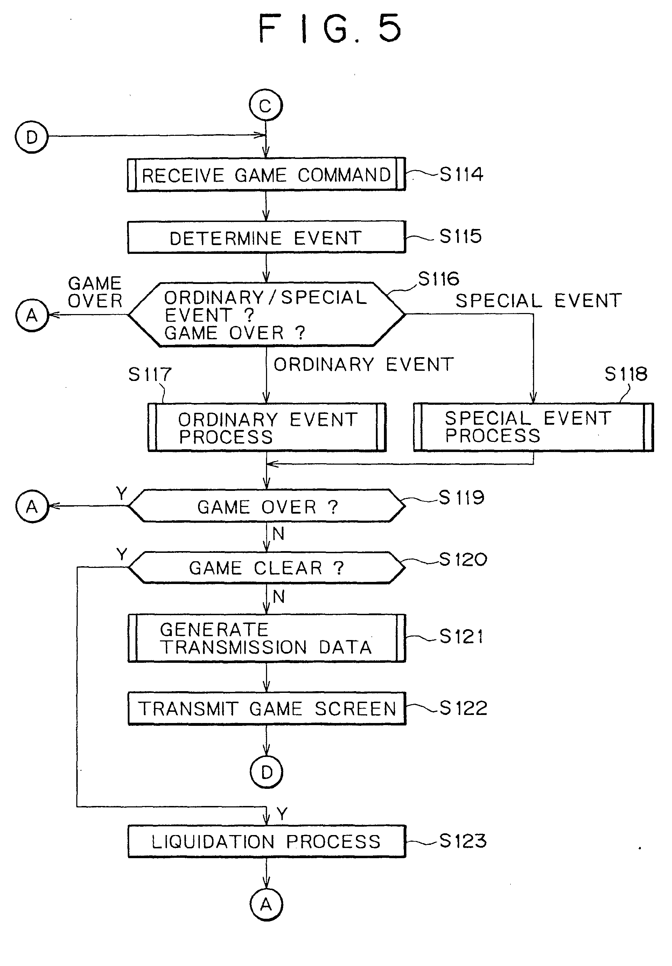

Referring to Fig. 5, the game server 20 receives a game command (URL) as a response to the game data (S114). In generating hypertexts and receiving game commands, a characteristic technique of preventing unfair actions (back prevention technique) is employed in the present network game distribution device 18. This technique utilizes the above-described back prevention counter value, which will be described in detail hereinafter. When the game command is received at the step S114, the game server 20 causes predetermined software to generate a random number, and determines a game event in accordance with the generated random number (S115). It is first determined as to whether the event is an ordinary event or a special event. The game server judges the type of the determined event (S116), and performs an ordinary event process if it is an ordinary event (S117), or a special event process if it is a special event (S118).

When the food runs out at this time, it is determined that the game is over, and the hypertext representing the port 34 is transmitted to the mobile phone 12 (S106). That is, in this pirate game, the food supply decreases by the amount corresponding to one tenth of the number of sailors as the player' s ship 32 advances. When the food supply reaches "zero", it is determined that the game is over. More specifically, the game server 20 checks "current number of sailors" and "current amount of food" in the argument 55 shown in Fig. 12. If the current amount of food is less than the amount corresponding to one tenth of the current number of sailors, it is determined that the game is over.

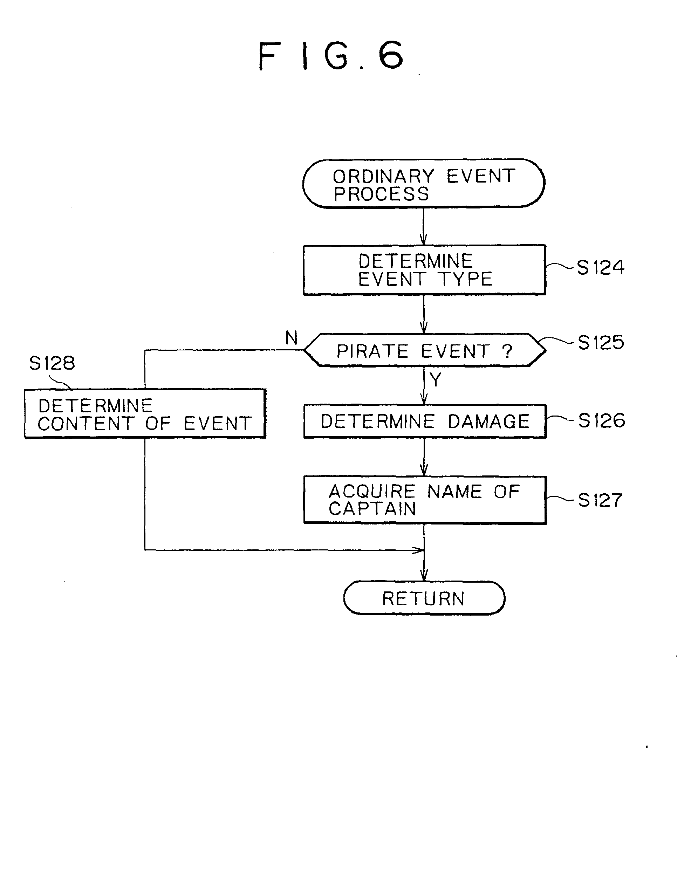

The ordinary event process at the step S117 is performed as in the flow chart of Fig. 6. More specifically, the type of event is determined first in the ordinary event process (S124). This determination is made based on a predetermined event occurrence probability table. Ordinary events include, for example, a pirate event, a monster event, a storm event, a food supply event, a sailor provision event, a return route discovery event, and the like. The event occurrence probability table defines the default probability at which each of these events occurs, and specific types of events are determined in accordance with the probability. For the dangerous sea area 36 and the calm sea area 40, a modified version of the event occurrence probability table is used. If the event determined at the step S124 is a pirate event (S125), the game server 20 decides the damage the pirate does to the player (player's ship 32, sailors, food supply, and even the captain) (S126). This decision is made based on a random number. The game server 20 then obtains the name of the captain corresponding to the damage determined at the step S126 from the ranking data shown in Fig. 9 (S127). That is, the ranking data for each sea area includes names of the top 20 captains ranked according to the amount of money acquired for each sea area, and if the damage determined at the step S126 is considerable, the name of a higher-ranking captain, i.e. a captain who has acquired a greater amount of money, is obtained at the step S127. If the damage determined at the step S126 is small, the name of a low-ranking captain is obtained. The name of the captain obtained appears on the game screen as the name of the pirate (enemy character). It is desirable that, when the name of the captain is obtained, the name of the captain set by the player him/herself currently provided with the game will not be displayed on the game screen. Therefore, the game server 20 refers to the customer identifying information transmitted from the mobile phone 12, and if that particular customer identifying information is registered in the sea area ranking data, desirably the name of the captain recorded corresponding to that particular customer identifying information is not employed as the name of the pirate, so as to prevent the enemy character having the name of the captain set by the player themselves from appearing in their own game. Further, if the name of the captain is the same as that set by the player currently provided with the game as registered in the sea area ranking data, it is also not possible to use that name of the captain as the name of the pirate, so that the pirate having the name set by the player will not appear as an enemy character in their own game. The acquired name of the captain is temporarily stored in RAM (not shown) on the game server 20. On the other hand, when the game event determined at the step S125 is judged as not being a pirate event, specific content of the event is determined based on a random number (S128). For example, in a monster event, the name of the monster and the damage the monster incurs to the player are determined. The determined content is temporarily stored in the unillustrated RAM provided in the game server 20.

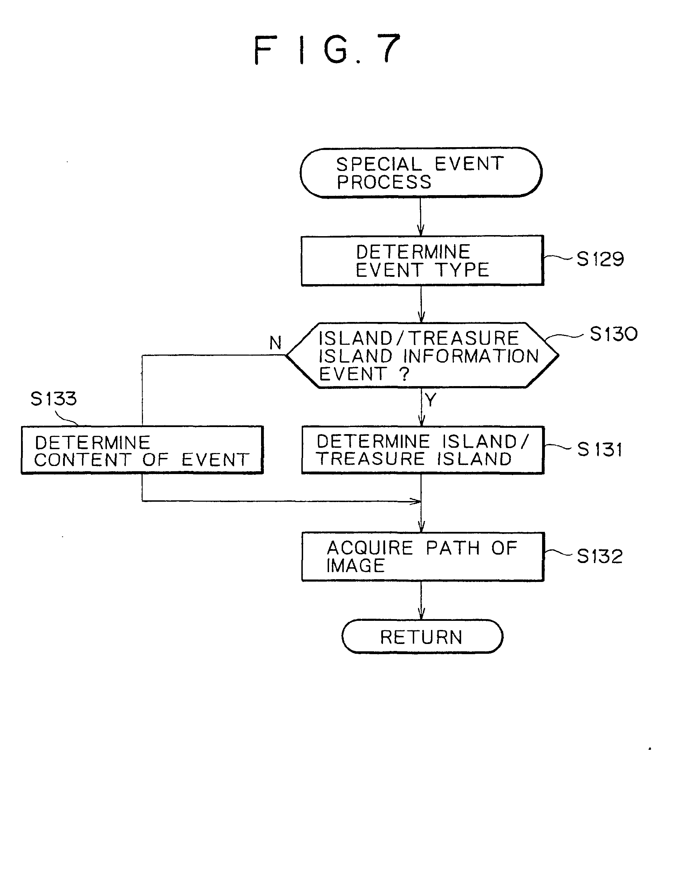

The special event process at the step S118 is performed as in the flow chart of Fig. 7. As shown, in the special event process a specific type of event is determined based on a random number (S129). Special events include, for example, a treasure island information event, an island information event, a treasure island arrival event, and a food supply event. A determination is made in step S130 as to whether or not the determined event is either an island information event or a treasure island information event. If it is either an island information event or a treasure island information event, the game server 20 causes generation of the definite island 42 in the sea area 31 (S131). The definite island 42 is determined based on the current position of the player's ship 32, and set at a position that can be reached from the current position of the player' s ship 32 with a plurality of game commands. The content established in this step is stored in the RAM (not shown) in the game server 20 so as to be provided as the argument 55 of the CGI program as illustrated in Fig. 12. In order to record the type of emerged definite island 42 as the argument 55 of the CGI program, determination is made as to whether the definite island 42 is an ordinary island or a treasure island by the event determined at the step S129, and the determined type is stored in the unillustrated RAM in the game server 20. The name of the path of image data corresponding to the type of the event is then obtained (S132). On the other hand, if a determination is made at the step S130 that the event is neither an island information event or a treasure island information event, the specific content of the determined event is determined (S133). For example, if it is a food supply event, the amount of food supplied to the player is determined based on a random number. Such determined content is temporarily stored in the RAM (not shown) in the game server 20.

Referring again to Fig. 5, after the ordinary event process (S117) or the special event process (S118) is completed, the game server 20 determines whether or not it is "game over". (S119). More specifically, the number of sailors may become zero in the ordinary event or the special event after encountering monsters or pirates, in which case it is determined that the game is over. When it is so determined, the hypertext for presenting such a message on the screen is transmitted to the mobile phone 12, and the image of the port 34 is displayed again (S106). If it is determined that the game is not yet over (S119), the game server 20 next determines whether it is "game clear" or not (S120). That is, if the player's ship 32 has reached the return island 39 in the game space 30 and the player decides to return to the port 34, the game server determines that it is "game clear" from such a game command.

If it is determined as "game clear", a calculation process is performed (S123). In this calculationprocess, the total amount of treasure acquired during the voyage is calculated, and if that amount ranks in the top 20, information of the player including the customer identifying information, the name of the captain, and the acquired money is added to the sea area ranking data. The customer identifying information, the name of the captain, and the acquired money of the player lowest in the rank are deleted from the ranking data for that sea area. Thus, the ranking data for that sea area stored in the game DB 22 is renewed.

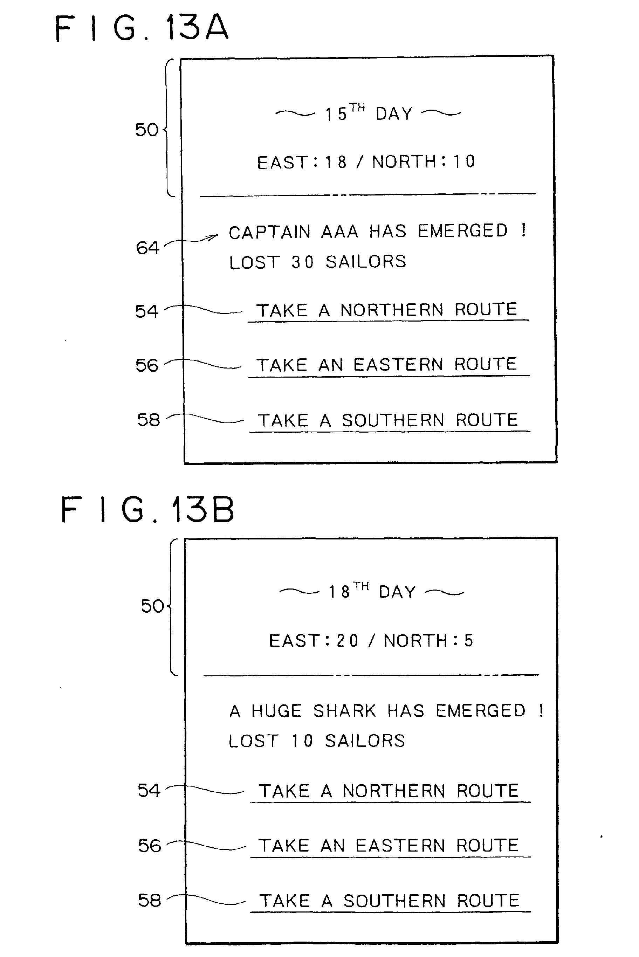

Meanwhile, when it is determined that it is not "game clear" at the step S120, the process advances to the step S121, where the matters determined at the ordinary event process (S117) or the special event process (S118) are read out from the RAM in the game DB 22 and the hypertext representing the game screen is generated based on the readout content. The game server 20 then transmits the generated hypertext to the mobile phone 12 (S122), and receives a game command from the mobile phone 12 again (S114). In generating the hypertext at the step S121, especially when a pirate event is selected during the ordinary event process, the name of the captain acquired from the sea area ranking data is embedded in the hypertext. Fig. 13A shows an example of the game screen for the pirate event. This game screen is presented on the display 24 of the mobile phone 12. As shown, this game screen includes a message 64 saying, "Captain AAA has emerged!" The name of the captain obtained from the sea area ranking data and temporarily stored in the RAM in the ordinary event process is put in the "AAA" portion of the message. Thus, by displaying the name of the captain recorded in the sea area ranking data as an enemy character in the game screen, the player is informed of the name of the captain set by other high-scored players, providing the network system 10 with a factor of unexpectedness. Further, as the name of the captain set by a player who has registered in the ranking data for each sea area appears on the game screen of other players, the players repeatedly play the game for self-assertion, trying to register the name of the captain set by themselves in the ranking data. This makes the network game system 10 even more attractive . When, for example, a monster event is selected in the ordinary event process, the game screen, such as the one shown in Fig. 13B, is presented on the display 24 of the mobile phone 12. A message, "A huge shark has emerged!" is presented on this game screen.

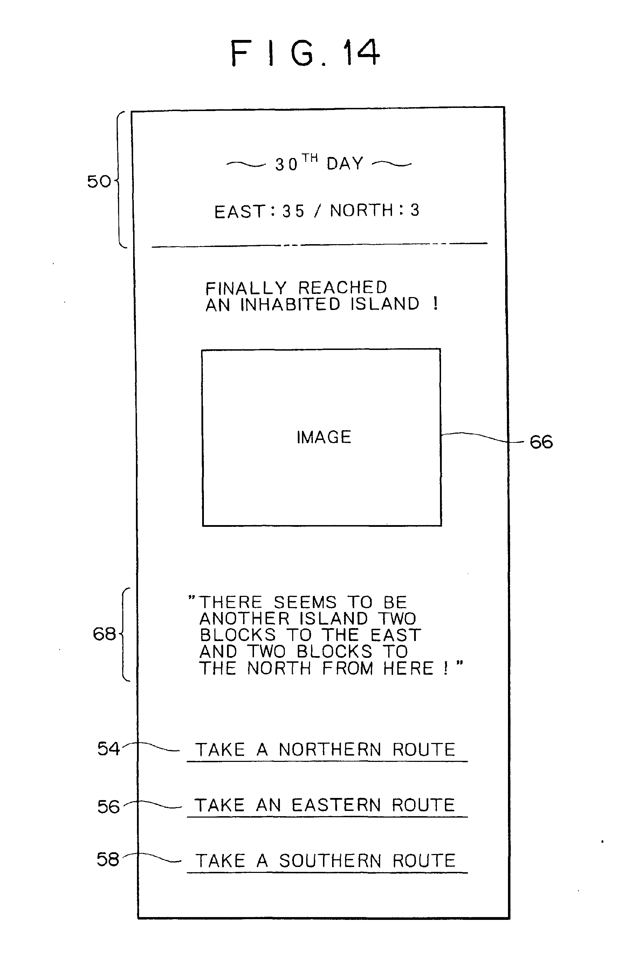

When an island information event is selected in the special event process (S118), the game screen, such as the one shown in Fig. 14, is presented on the display 24 of the mobile phone 12. On the game screen shown in this figure, a message 68 saying, "There seems to be another island two blocks to the east and two blocks to the north from here," is displayed. An image 66 suitable for the island information event is embedded in this game screen. The image 66 is displayed by embedding the path name of the image 66 in the hypertext. The path name is the one acquired at the step S132. In the link tags for displaying the link buttons 54, 56, and 58, the sea coordinate of the emerged island is set in the argument 55 of the CGI program. In this example, the coordinate obtained by adding (2, -2) to the current coordinate in the sea area is set in the item "coordinate of the emerged island in the sea area" of the argument 55. In the column of the "type of the emerged island", it is put that the emerged island is an ordinary island.

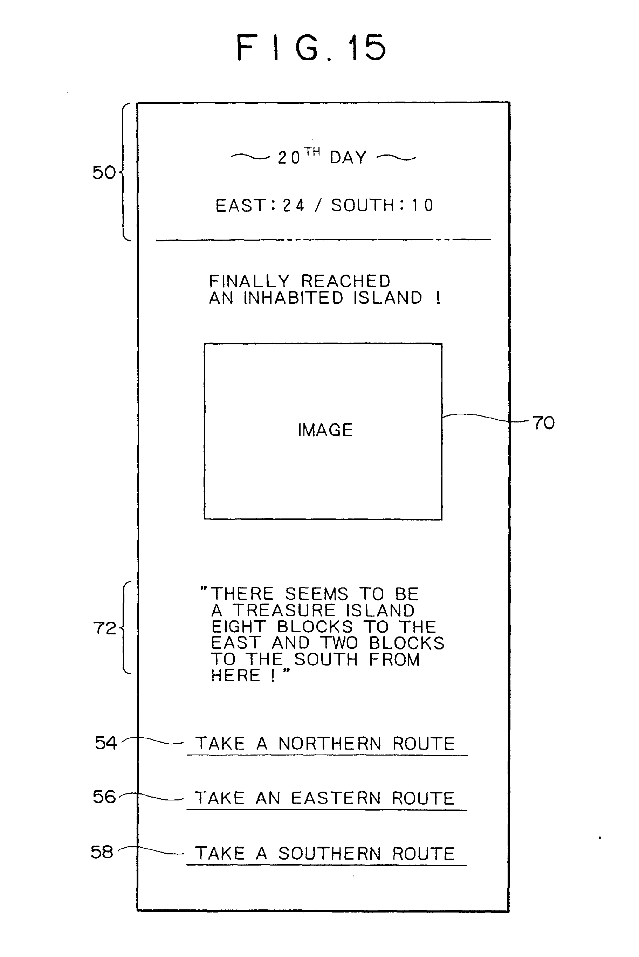

When a treasure island information event is selected in the special event process (S118), a message 72 saying, for example, "There seems to be a treasure island eight blocks to the east and two blocks to the south from here!" is presented on the display 24 of the mobile phone 12, as shown in Fig. 15. In the link tags for displaying the link buttons 54, 56, and 58, the coordinate obtained by adding (8, 2) to the current coordinate in the sea area is set in the item "coordinate of the emerged island in the sea area" of the argument 55. As the "type of the emerged island", it is put that the emerged island is a treasure island. The displayed game screen includes an image 70 suitable for expressing that information of the treasure island is acquired. The image 70 is displayed by embedding the path name of the image 70 in the hypertext transmitted to the mobile phone 12. The path name is the one acquired at the step S132.

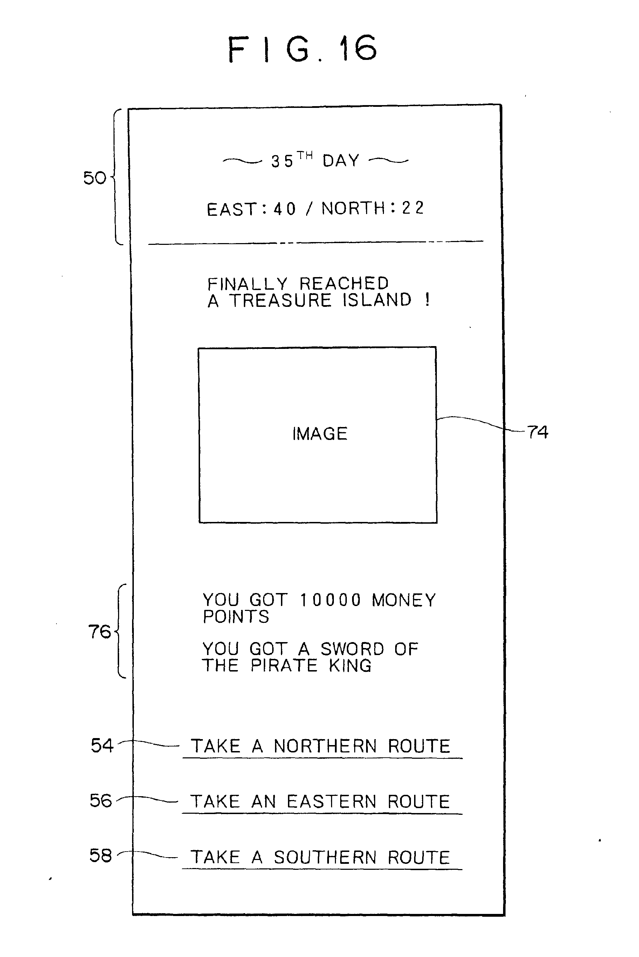

When a treasure island arrival event is selected in the special event process (3118), a game screen, such as the one shown in Fig. 16, is presented on the display 24 of the mobile phone 12. On this game screen, an image 74 suitable for expressing that the player's ship has reached the treasure island is displayed. The image 74 is presented by embedding the name of the path of the image 74 in the hypertext transmitted to the mobile phone 12. The path name of the image 74 is the one acquired in the step S132. At this moment, a message 76 is displayed based on the content of the event determined at the step S133. In the example shown in the figure, the message 76 saying, "Acquired 10000 money points . Found a sword of the pirate king," is displayed. In this case, 10000 points are added to the "current treasure" and the fact that that the sword of the pirate king is obtained is put in the "acquired items" as the argument 55 of the CGI program.

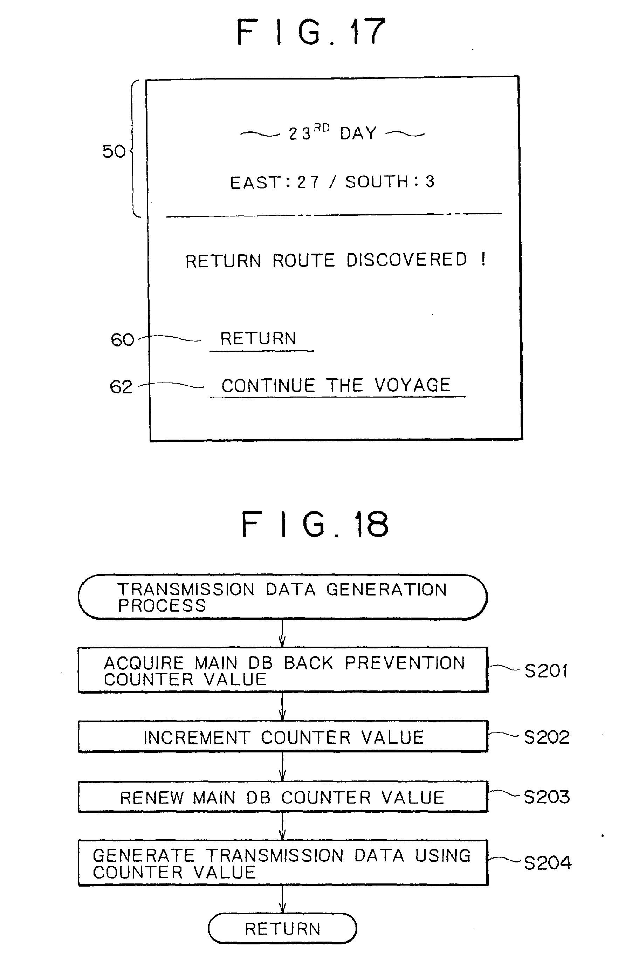

When a return path discovery event is selected in the ordinary event process (3117), such a game screen as the one shown in Fig. 17 is displayed. On this game screen, a link button 60 corresponding to a game command for returning, and a link button 62 corresponding to a game command for continuing the voyage are displayed. When the player selects the linkbutton 60, the player's ship 32 returns to the port 34. On the other hand, when the player selects the link button 62, a return to the port 34 is canceled and the voyage is continued.

Finally, a technique for preventing unfair actions (back prevention technique), which is a characteristic feature of the present network game system 10, will be described. In order to implement this unfair action prevention technique, the process shown in Fig. 18 is performed at the step S121 in Fig. 5. In this process, the game server 20 first acquires abackprevention counter value stored in the game DB 22 (S201). The back prevention counter value is stored in the main DB in association with the customer identifying information obtained from the mobile phone 12. The game server 20 generates a new back prevention counter value based on the acquired value. More specifically, the game server 20 increments the value by one (S202). The value is stored back in the main DB provided in the game DB 22. The "current back prevention counter value" in the main DB is thus renewed (S203). Transmission data is generated using the renewed counter value (S204). Therefore, the renewed counter value is set as the "current back prevention counter value" in the argument 55 for the CGI program included in the link buttons 54, 56, 58, and the like.

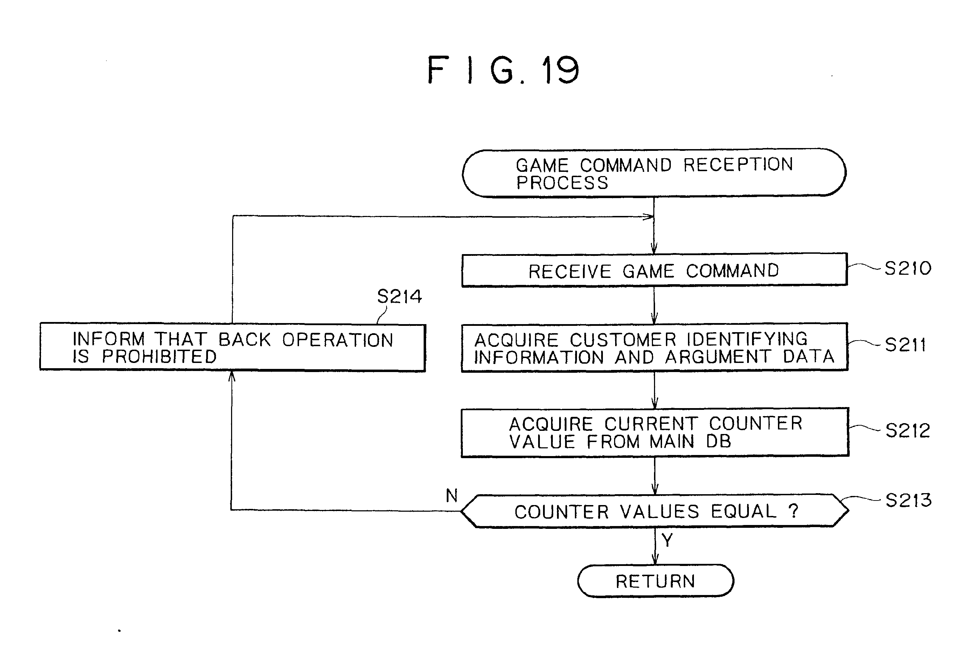

When a player selects a game command with the direction button 26 and the function button 28 of the mobile phone 12 that has received the thus generated hypertext, the game command is transmitted to the game server 20. In receiving the game command (URL), the "current back prevention counter value" included therein as the argument 55 is referred to. Fig. 19 is a flow chart illustrating this process, which is performed in the process at the step S114 (Fig. 5). According to the process, the game server 20 receives the game command (S210), and obtains the customer identifying information and the argument 55 for the CGI program (S211). The game server 20 further obtains the "current back prevention counter value" from the main DB provided in the game DB 22 (S212). The "current back prevention counter value" to be obtained here is the one associated with the customer identifying information obtained at the step S211. The game server 20 compares the "current back prevention counter value" included in the argument 55 obtained at the step S211 and the "current back prevention counter value" obtained from the game DB 22 at the step S212, and checks whether or not these two values are equal (S213). If they are equal, it is determined that no unfair operation is performed, and the process returns and proceeds to the next step (S115). If they are not equal, a hypertext for displaying and informing that back operation (unfair operation) is prohibited is generated and transmitted to the mobile phone 12 (S214). The game server 20 again waits to receive a game command (S210).

More specifically, data is communicated between the mobile phone 12 and the game server 20 with HTTP (hypertext transfer protocol), and the previously obtained hypertext can be displayed again on the mobile phone 12 by using the "back" function of Web browsers. When the player causes the game screen to be presented based on past hypertext already obtained on the display 24 and presses the links button 54, 56, 58, or the like included therein, the argument 55 included in the link tag is transmitted to the game server 20. Then, the "current back prevention counter value" stored in the game DB 22 does not match the "current back prevention counter value" transmitted from the mobile phone 12 as the argument 55 of the CGI program. On such an occasion, according to the unfair action prevention technique provided to the present network game distribution device 18, the mobile phone 12 is informed that an unfair operation is prohibited. Unless this unfair action prevention technique is employed, when a player plays a game with the mobile phone provided with a function to operate based on the past game screen and encounters an unwanted game event, the player can go back and retransmit a game command to the game server 20 for canceling the encounter with such a game event. The network game system 10 of the invention enables the prohibition of such unfair operations by employing the above-described unfair action prevention technique and managing the backprevention counter value in the game DB 22. As a result, players can enjoy thrill and excitement because they cannot reselect a game command, rendering the network game system 10 of this type even more attractive.

According to the network game system 10 described above, especially when a pirate event is selected in the ordinary event process (S117), the name of the captain set by a high-scoring player in the sea area 31 where the player is playing the game appears on the screen as the name of a pirate (enemy character), thereby enhancing the feeling of the player that they are actually participating in the network game system 10. Further, when the name of the captain set by the player is registered in the ranking data for each sea area, that name of the captain appears on the game screen of other players, so that players try to improve their skills of this pirate game aiming for registration of the name of the captain they named in the sea area ranking data.

### [Second Embodiment]

In a second embodiment of the invention, an example where the present invention is applied to a quiz game is described. This quiz game is implemented by the network game system 10 illustrated in Fig. 1. The mobile phone 12 is provided with a quiz through the communication network 16, and the network game distribution device 18 determines if the answer is correct or not. In the description below, the reference numerals in this figure are used if necessary.

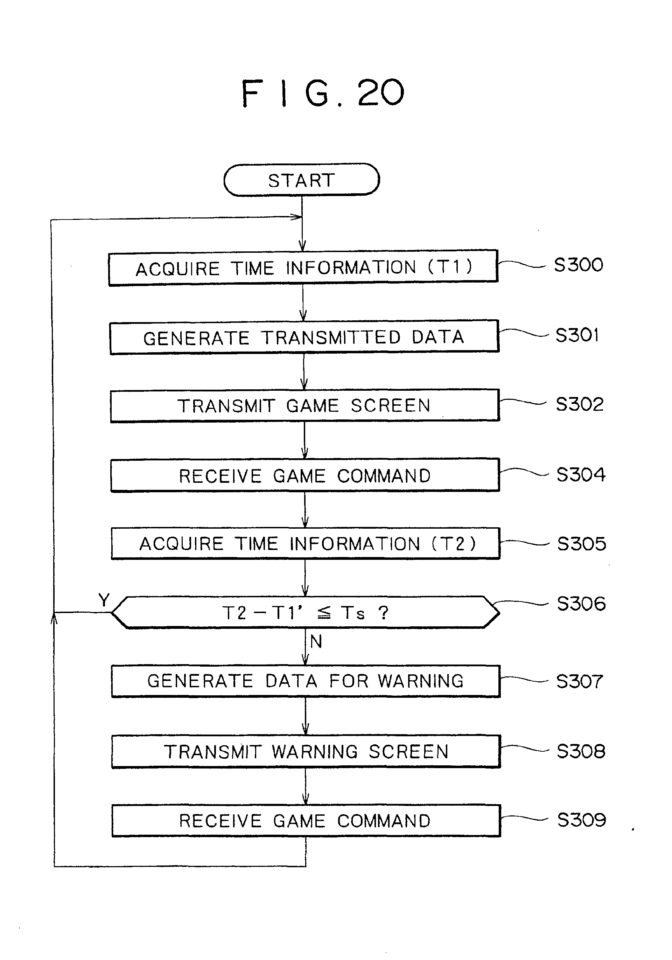

Fig. 20 is a flow chart illustrating a game process of the game server 20 for implementing the quiz game according to the present embodiment. In this game process, time information T1 is first acquired (S300). The game server 20 is provided with a well-known timing function element, and acquires the current time information output therefrom. The hypertext (game data) representing a game screen corresponding to the development of the game is generated (S301). This hypertext is transmitted to the mobile phone 12 through the communication network 16 and the mobile phone base station 14 (S302). At the mobile phone 12, the received hypertext is presented on the display 24 using the Web browsing function.

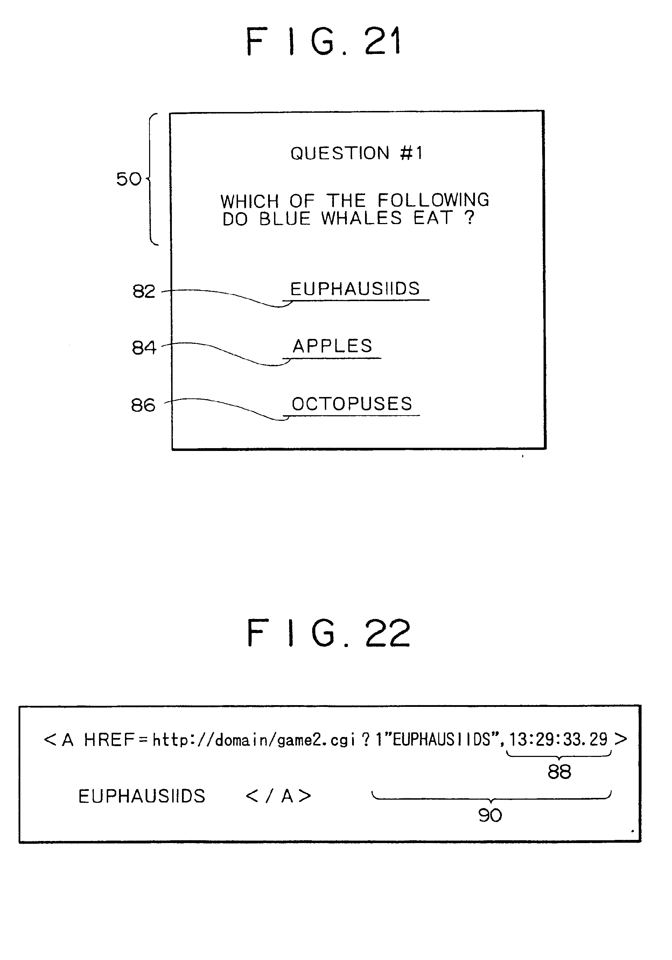

Fig. 21 shows an example of the game screen presented on the display 24 at this moment. On the game screen shown in this figure, a question portion 80 is displayed at an upper part thereof, and link buttons 82, 84, and 86 for providing options for the answer are displayed under the portion 80. In this example, the link button 82 corresponds to the right answer, and the other link buttons 84 and 86 correspond to the wrong answers. Fig. 22 shows a portion of the hypertext for generating the game screen shown in Fig. 21 that is used for displaying the link button 82. As shown, the CGI program "domain/game2.cgi" is designated as a link in the link tag for displaying the linkbutton 82. An argument 90 to be provided to the CGI program as an execution parameter is added at the portion following "?". In this example, the argument 90 includes "1" representing that it is the answer to the question #1, "euphausiids" indicating that the player has selected the first option as the answer, and "13:29:33.29" as time information 88, in this order. In generating the hypertext for presenting the game screen in accordance with the development of the game at the step S301, the link tag for presenting the option for the answer is generated to include the time information 88 as shown in Fig. 22. The time information 88 is the time information T1 acquired at the step S300.

After the player selects one of the link buttons 82, 84, and 86 on the game screen shown in Fig. 21, that selection is transmitted to the game server 20 as the URL, i.e. the game command. The game server 20 receives this game command (S304). After this reception, the time information of that moment output again from the timing function element is acquired as time information T2 (S305). The game command received from the mobile phone 12 includes the time information 88, as shown in Fig. 22. The time information 88 included in the game command received from the mobile phone 12 will be hereinafter be referred to as time information T1'. The game server 20 acquires the time information T1' from the received game command, and determines whether or not the time period between the time information T1' and the time information T2 exceeds a predetermined time period Ts (S306). In other words, the value T2-T1' is calculated, and a determination is made as to whether or not it exceeds the predetermined time period Ts. The predetermined time period Ts is set to, for example, 30 seconds, 1 minute, 3 minutes, or the like, in accordance with the content or level of the game.

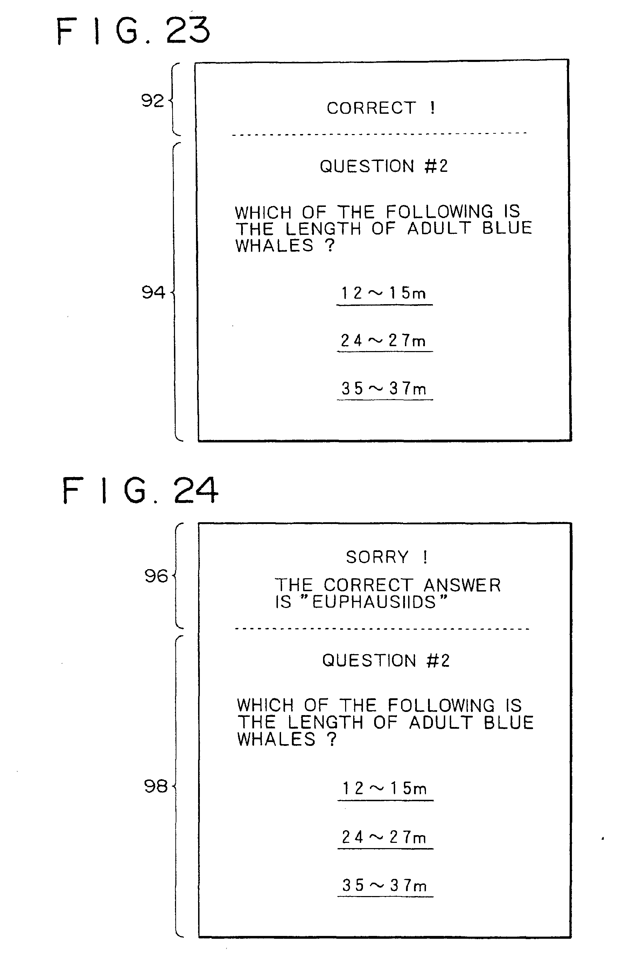

If the value is less than the predetermined time period Ts, the process returns to step S300, the time information T1 is acquired again and the hypertext for the next screen to set a question is generated using that information. At this time, whether or not the player answers correctly is judged based on the game command received at the step S304, and the result is included in the question screen at an upper portion thereof. Fig. 23 shows an example of the game screen presented when the player has answered correctly. As shown, when the answer is correct, a judgment message 92 saying that the answer is correct is displayed at an upper portion of the game screen, and below that message a question portion 94 for the next question is displayed. Fig. 24 shows an example of the game screen presented when the player answered incorrectly. As shown, when the answer is incorrect, a judgment message 96 saying that the answer is incorrect is displayed at an upper portion of the game screen, and below that message a question portion 98 for the next question is displayed.

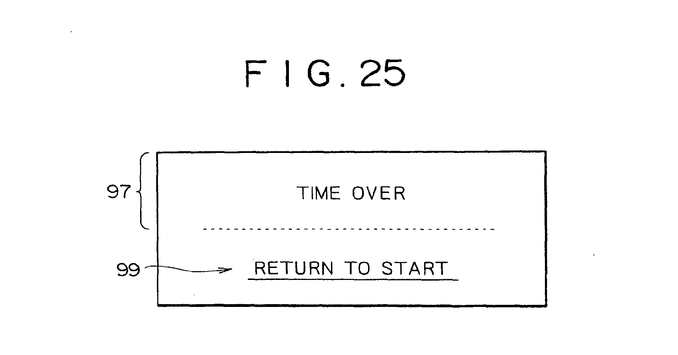

Meanwhile, when it is determined at the step S306 that the time period between the time information T1' and the time information T2 exceeds the predetermined time period Ts, a hypertext for giving a warning is generated (S307). Such a situation occurs when, for example, the player sends a game command from the past game screen using the "back" function provided with the Web browser of the mobile phone 12, or when it takes a long time for the player to choose an answer and, therefore, a game command, or the like. The generated hypertext is transmitted to the mobile phone 12 (S308), and presented as the game screen on the display 24. Fig. 25 illustrates an example of a warning screen. On this screen, a warningmessage 97 saying, "time over" is displayed at an upper part of the screen, and below this message a link button 99 corresponding to the game command for returning to the start screen is displayed. When the player confirms that the time is over by observing the warning screen, they press the link button 99 to send the game command to the game server 20. When the game server 20 receives the game command (S309), the process returns to the step S300 to acquire the time information T1, and the hypertext information for the start screen is generated (S301).

According to the network game system 10 described above, an answering time period is set, thereby preventing unfair actions, such as answering the quiz while referring to an encyclopedia, or the like. That is to say a deadline is set for the game data. As a result, thrill and excitement can be offered to players of the game. Further, it is also possible to prohibit the game process from following an ordinary course when a player invokes a previous game screen by using the "back" function of the Web browser and then sends a game command. Thus, the present invention can prevent unfair actions where a player returns to a previous question screen after an answer proves to be incorrect, and chooses another option.

It should be noted that the present invention is not limited to the above-described first or second embodiment.

For example, while an example where the network game system 10 is implemented using the mobile phone 12 is described above, any personal data terminals that have a Web browsing function and that can be connected to the communication network 16 through wireless communication can be used other than mobile phones. Further, connection to the communication network 16 need not be made through wireless communication, and ordinary personal computers can be used to connect to the game server 20.

Although a counter value incrementing by 1 as the game progresses is used as the game data identifying information in the first embodiment, random numbers generated in accordance with well-known methods can also be used. Further, the game data identifying information need not be generated during the game, and may be determined and set for each piece of game data before the game is played.

While an example where the present invention is applied to a pirate game and a quiz game is described in the above embodiments, the present invention is applicable to any kind of games.

## Claims

1. A network game system comprising a game terminal, and a game distribution device for providing the game terminal with game data through a communication network, wherein:
said game distribution device comprises
game data generation means for generating game data including game command information and game data identifying information,
game data identifying information storage means for storing the game data identifying information included in the generated game data, and
game data transmission means for transmitting the generated game data to said game terminal; and
said game terminal comprises
game data reception means for receiving the game data from said game distribution device,
game command generation means for generating a game command including the game data identifying information included in the received game data based on the game command information included in the received game data, and
game command transmission means for transmitting the generated game command to said game distribution device; and
said game distribution device further comprises
game command reception means for receiving the game command from said game terminal, and
game process limitation means for performing a game process based on the received game command when a match is observed between the game data identifying information included in the received game command and the game data identifying information stored in said game data identifying information storage means, and limiting the game process when no match is observed.

2. The network game system according to claim 1, wherein said game data generation means comprising said game distribution device includes game data identifying information generation means for generating the game data identifying information when the game data is generated, and the game data identifying information generated by the game data identifying information generation means is included in the game data.

3. The network game system according to claim 1 or 2, wherein said game process limitation means returns the game data based on the received game command to said game terminal as said game process when said match is observed, and limits the game process and returns game data different from said game data to said game terminal when said match is not observed.

4. The network game system according to any of claims 1-3, wherein said game data generation means generates game data where the game data identifying information is embedded in the game command information.

5. A game distribution device for providing a game terminal with game data through a communication network, comprising:
game data generationmeans for generating game data including game command information and game data identifying information;
game data identifying information storage means for storing the game data identifying information included in the generated game data;
game data transmission means for transmitting the generated game data to said game terminal;
game command reception means for receiving a game command including the game data identifying information from said game terminal; and
game process limitation means for performing a game process based on the received game command when a match is observed between the game data identifying information included in the received game command and the game data identifying information stored in said game data identifying information storage means, and limiting the game process when no match is observed.

6. A game distribution method for providing a game terminal with game data through a communication network, the method comprising:
generating game data including game command information and game data identifying information;
storing the game data identifying information included in the generated game data;
transmitting the generated game data to said game terminal;
receiving a game command including the game data identifying information from said game terminal; and
performing a game process based on the received game command when a match is observed between the game data identifying information included in the received game command and the stored game data identifying information, and limiting the game process when no match is observed.

7. A network game system comprising a game terminal, and a game distribution device for providing the game terminal with game data through a communication network, wherein:
said game distribution device includes
timing means for generating time information,
game data generation means for generating game data including time information generated by the timing means and game command information, and
game data transmission means for transmitting the generated game data to said game terminal; and
said game terminal includes
game data reception means for receiving the game data from said game distribution device,
game command generation means for generating a game command including the time information included in the received game data based on the game command information included in the received game data, and
game command transmission means for transmitting the generated game command to said game distribution device;
and
said game distribution device further includes
game command reception means for receiving the game command from said game terminal, and
game process limitation means for comparing the time information included in the received game command and current time information generated by said timing means, performing a game process based on the received game command when a predetermined time period has not yet elapsed, and limiting the game process when the predetermined time period has elapsed.

8. The network game system according to claim 7, wherein said game process limitation means returns the game data based on the received game command to said game terminal as said game process when said predetermined time period has not yet elapsed, and limits said game process and returns game data different from said game data to said game terminal when said predetermined time period has elapsed.

9. The network game system according to claim 7 or 8, wherein said game data generation means generates the game data in which the time information is embedded in the game command information.

10. A game distribution device for providing a game terminal with game data through a communication network, comprising:
timing means for generating time information;
game data generationmeans for generating game data including the time information generated by the timing means and game command information;
game data transmission means for transmitting the generated game data to said game terminal;
game command reception means for receiving a game command including the time information from said game terminal, and
game process limitation means for comparing the time information included in the received game command and current time information generated by said timing means, performing a game process based on the received game command when a predetermined time period has not yet elapsed, and limiting the game process when the predetermined time period has elapsed.

11. Agame distributionmethod for providing a game terminal with game data through a communication network, the method comprising:
generating time information;
generating game data including the generated time information and game command information;
transmitting the generated game data to said game terminal; receiving a game command including the time information from said game terminal; and
comparing the time information included in the received game command and current time information, performing a game process based on the received game command when a predetermined time period has not yet elapsed, and limiting the game process when the predetermined time period has elapsed.
